# EUROPEAN PATENT APPLICATION

(11) **EP 4 708 492 A1**
(43) Date of publication of application: **11.03.2026**
(21) Application number: 24865771.0
(22) Date of filing: 06.09.2024
(51) Int. Cl.: H01M 50/204, H01M 50/251, H01M 50/244

(54) **BATTERY RACK AND ENERGY STORAGE SYSTEM INCLUDING SAME**

(30) Priority: 15.09.2023 KR 20230123074
(71) Applicant: LG Energy Solution, Ltd., Seoul 07335 (KR)
(72) Inventor: SON, Kown, Daejeon 34122 (KR); KIM, Myoungsic, Daejeon 34122 (KR); JUNG, Goansu, Daejeon 34122 (KR); KIM, Heechan, Daejeon 34122 (KR); LEE, Seungjun, Daejeon 34122 (KR)
(74) Representative: BCKIP Part mbB
(86) International application number: PCT/KR2024/013469
(87) International publication number: WO 2025/058330

(57) **Abstract**

A battery rack according to an embodiment of the present disclosure is for housing a battery, the battery rack comprising: a first sub-rack that includes a first column that is vertically erected, and includes a plurality of battery housing spaces formed along the first column, and a second sub-rack that includes a second column that is vertically erected, and includes a plurality of battery housing spaces formed along the second column, wherein the first sub-rack and the second sub-rack are arranged along the longitudinal direction of the battery rack, and wherein the first sub-rack and the second sub-rack have a structure with an opened upper end.

## Description

### [TECHNICAL FIELD]

### Cross-Reference to Related Application(s)

This application claims priority to and the benefit of Korean Patent Application No. 10-2023-0123074, filed on September 15, 2023, with the Korean Intellectual Property Office, the disclosure of which is incorporated herein by reference in its entirety.

The present disclosure relates to a battery rack and an energy storage system including the same, and more particularly, to a battery rack having a simplified structure and an energy storage system including the same.

### [BACKGROUND]

In recent years, as issues such as power shortages and environmentally friendly energy have come to surface, energy storage systems(ESS) for storing generated power are attracting a lot of attention. Typically, the use of such an ESS makes it easy to build a power management system such as a smart grid system, so that power supply and demand can be easily adjusted in specific regions or cities. In addition, as the commercialization of electric vehicles is in full scale, this ESS can be applied to electric charging stations where electric vehicles can be charged.

ESS can be configured in a variety of forms, but typically, it can be configured in a form that includes one or more containers. In this case, the container may include a form in which a plurality of battery modules or battery packs (hereinafter referred to as batteries) are connected in series and/or parallel to each other. Here, a plurality of batteries can be housed inside the container via a rack frame or a separate fixed structure.

Meanwhile, the rack frame on which the battery is mounted is required to have sufficient rigidity and seismic performance in order to stably maintain its own structure, support the weight of the battery, and prevent the battery from being separated. Conventionally, the durability of the rack frame has been strengthened by changing the physical properties or increasing the thickness of the frame, and as described in the prior art literature (Korean Unexamined Patent Publication No. 2020-0089538), a method was devised to supplement the rigidity and seismic performance of the rack frame by adding a bead to the top plate or base plate in the rack frame. However, the rack frame needs to have a simple structure to reduce the overall weight of the ESS and to promote heat dissipation and prevent fire of batteries densely packed in a narrow space, whereby the above-mentioned structure has limitations in not contributing to improving the overall performance of the ESS.

Therefore, there is a need to develop a new rack frame structure that minimizes the weight and closing performance while ensuring the rigidity and seismic performance of the rack frame.

### [DETAILED DESCRIPTION OF THE INVENTION]

### [Technical Problem]

It is an object of the present disclosure to provide a battery rack having a simplified structure while ensuring rigidity and seismic performance, and an energy storage system including the same.

However, the technical objects to be solved by the embodiments of the present disclosure are not limited to those disclosed above, and may be expanded in various ways within the scope of the technical idea included in the present disclosure.

### [Technical Solution]

According to an embodiment of the present disclosure, there is provided a battery rack for housing a battery, the battery rack comprising: a first sub-rack that includes a first column that is vertically erected, and includes a plurality of battery housing spaces formed along the first column, and a second sub-rack that includes a second column that is vertically erected, and includes a plurality of battery housing spaces formed along the second column, wherein the first sub-rack and the second sub-rack are arranged along the longitudinal direction of the battery rack, and wherein the first sub-rack and the second sub-rack have a structure with an opened upper end.

The battery rack further comprises a horizontal frame extending along the longitudinal direction of the battery rack, wherein the horizontal frame may be vertical to the first column and the second column, and the horizontal frame may be coupled with an end of the first column and an end of the second column.

The first column and the second column may be located adjacent to each other, and the first column and the second column may be coupled through a connection block located between the first column and the second column.

One side of the connection block may be coupled with the first column, and the other side of the connection block may be coupled with the second column.

The connection block has a shape of a square tube, and the connection block comprises a front surface located in front of the battery rack, and one side surface and the other side surface extending vertically from two opposing edges of the front surface toward the rear of the battery rack, wherein the one side surface may be coupled with the first column, and the other side surface may be coupled with the second column.

The front surface may be coupled with the first column and the second column.

At least two front fastening holes are formed on the front surface of the connection block, wherein one of the two front fastening holes located at one side may correspond to the first column, and the other of the two front fastening holes located at the other side may correspond to the second column.

Four front fastening holes are formed on the front surface of the connection block, and the four front fastening holes are located at each vertex of an imaginary square, wherein two of the four front fastening holes located at one side may correspond to the first column, and two of the four front fastening holes located at the other side may correspond to the second column.

Side fastening holes are formed on one side surface and the other side surface of the connection block, wherein the side fastening hole formed on the one side surface may corresponds to the first column, and the side fastening hole formed on the other side surface may correspond to the second column.

The number of the side fastening holes formed on the one side surface and the other side surface of the connection block may be two or more.

The first column and the second column are located adjacent to each other, and the axial cross section of the first column and the axial cross section of the second column may have shapes symmetrical with each other.

The first column and the second column are located adjacent to each other, the first column comprises a first outside curved part that is curved toward the outside of the first sub-rack, and a first inside curved part that is curved toward the inside of the first sub-rack, the second column comprises a second outside curved part that is curved toward the outside of the second sub-rack, and a second inside curved part that is curved toward the inside of the second sub-rack, the first outside curved part and the second outside curved part are located adjacent to each other, and a separation space may be formed between the first inside curved part and the second inside curved part.

The connection block is located in the separation space, and the first column and the second column may be coupled through the connection block.

An opening is formed on a rear surface of the first column and the second column, and the connection block may enter the separation space through the opening.

The opening may be formed by deforming or removing a part of the first column and the second column.

The connection block may be located adjacent to the end of the first column and the end of the second column.

The number of the connection block is two or more, wherein one of the connection blocks may be located at one end of the first column and the second column, and the other may be located at the other end of the first column and the second column.

The first column comprises a front column located in front of the battery rack, and a rear column located in the rear of the battery rack, the second column comprises a front column located in front of the battery rack, and a rear column located in the rear of the battery rack, and the number of the connection block is two or more, wherein one of the connection blocks may be located between the front column of the first column and the front column of the second column, and the other of the connection blocks may be located between the rear column of the first column and the rear column of the second column.

The battery rack may further comprise a third sub-rack that is located adjacent to the first sub-rack or the second sub-rack.

According to another embodiment of the present disclosure, there is provided an energy storage system comprising the above-mentioned battery rack.

### [Advantageous Effects]

According to an embodiment, the plate-shaped members located at an upper end and a lower end of the rack frame may be eliminated, thereby achieving structural simplification of the rack frame.

According to another embodiment, the rack frame has a structure in which at least two sub-rack frames are coupled with each other, so that the overall rigidity and structural stability of the rack frame can be enhanced. Further, since the size of the rack frame can be adjusted in accordance with the size of the container to which the rack frame is fixed, the compatibility of the rack frame can be improved.

The effects of the present disclosure are not limited to those described above, and other effects that are not described herein may clearly be understood by one of ordinary skill in the art from the appended claims.

### [BRIEF DESCRIPTION OF THE DRAWING]

FIG. 1 is a perspective view of a conventional battery rack.
FIG. 2 is a perspective view of a battery rack according to an embodiment of the present disclosure.
FIG. 3 is an XZ cross-sectional view taken along the cutting line A-A of FIG. 2.
FIG. 4 is a top view of the battery rack according to FIG. 2.
FIG. 5 is an XY cross-sectional view taken along the cutting line B-B of FIG. 2.
FIG. 6 is a perspective view of a sub-rack included in the battery rack according to FIG. 2.
FIG. 7 is a perspective view of a support frame included in the battery rack according to FIG. 2.
FIG. 8 is a diagram for explaining the coupling of a sub-rack, a support frame, and a connection block included in the battery rack according to FIG. 2.
FIG. 9 is a diagram showing a state where a sub-rack and a connection block are located on a support frame included in a battery rack according to FIG. 2.
FIG. 10 is a diagram for explaining the coupling of the connection block and the column in the battery rack according to FIG. 2.
FIG. 11 is an enlarged diagram of the coupling portion of the sub-rack in the battery rack according to FIG. 2.
FIGS. 12 to 14 are axial cross-sections of the column of the battery rack according to FIG. 2.
FIGS. 15 to 17 are diagrams for explaining the coupling of the column and the connection block in the battery rack according to FIG. 2.
FIG. 18 is a diagram showing another form of the battery rack according to an embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be embodied in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity. Meanwhile, similar to the case where it is described as being located "on" or "above" another part, the case where it is described as being located "below" or "under" another part will also be understood with reference to the above-mentioned contents.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

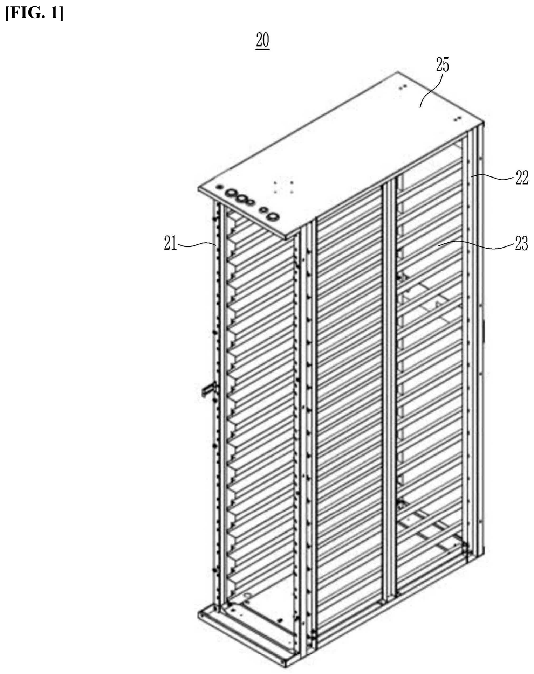

FIG. 1 is a perspective view of a conventional battery rack.

Referring to FIG. 1, a conventional battery rack 20 includes columns 21 and 22 configured to extend vertically, a bracket 23 that extends between the two columns 21 and 22 to thereby form a housing space on which a battery is mounted, and two plate-shaped members 25 that are coupled to the upper or lower ends of the two columns 21 and 22 to thereby maintain the overall shape of the battery rack 20.

Here, the battery is an energy storage unit provided to the battery rack 20, and may be a battery module or a battery pack.

Here, the plate-shaped member 25 can be made from a metal, and can be located at an upper end and a lower end of the battery rack 20, respectively. The plate-shaped member 25 located at the lower end plays a role in supporting the load of the battery rack 20, and the plate-shaped member 25 located at the upper end can fix the position of the columns 21 and 22 so that the structure of the battery rack 20 is stably maintained.

Conventionally, the positions of the columns 21 and 22 were fixed through the plate-shaped member 25 in this way, thereby forming the overall structure of the battery rack 20 and ensuring the rigidity. However, since the plate-shaped member 25 must be made from a metal with high rigidity, it is heavy and has a structure that seals the upper end and the lower end of the battery rack 20, there was a problem of obstructing the heat dissipation of the battery mounted on the battery rack 20.

Below, a battery rack according to an embodiment of the present disclosure will be described.

The battery rack of the present embodiment has been designed to solve the above-mentioned problems, and can have a structure simpler than a conventional battery rack 20. Therefore, the battery rack of the present embodiment described below has the effects of promoting heat dissipation of the battery through a simplified structure, reducing the overall weight, thereby reducing transportation costs, and increasing energy density.

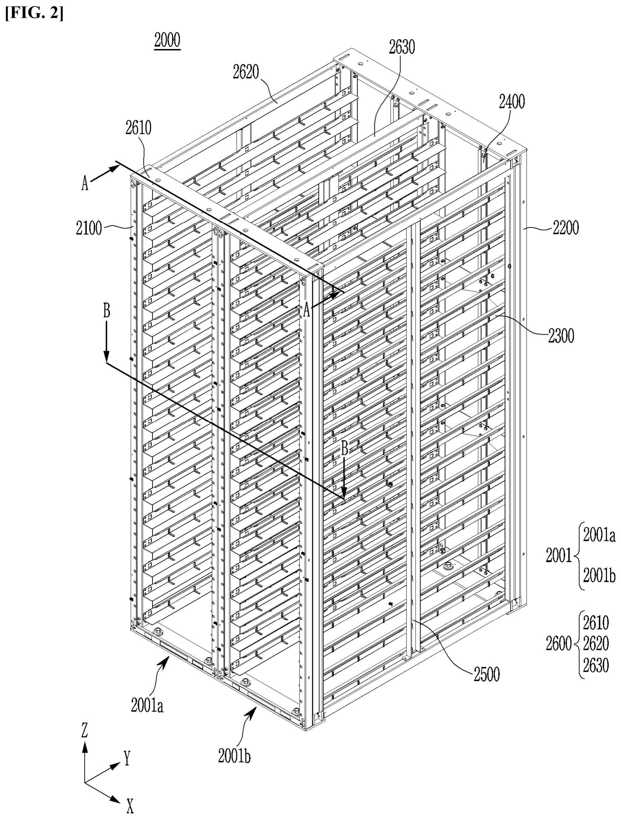

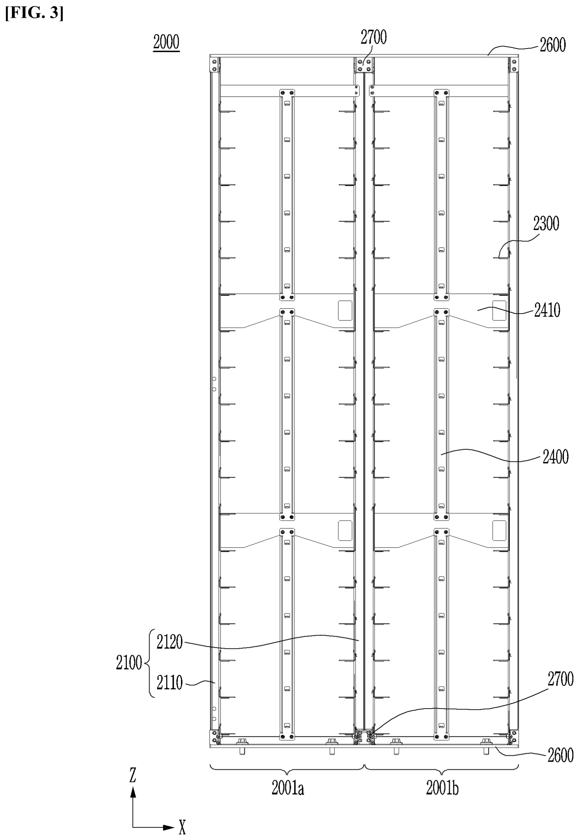

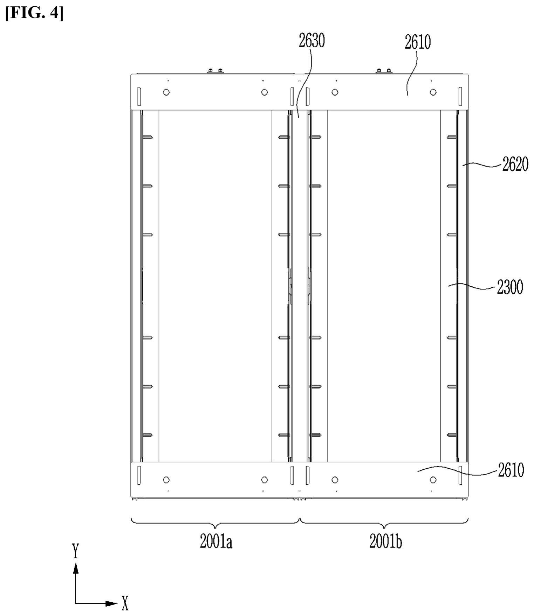

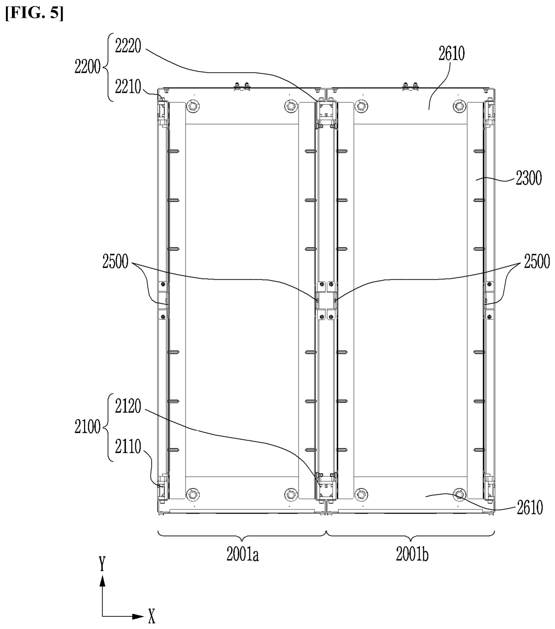

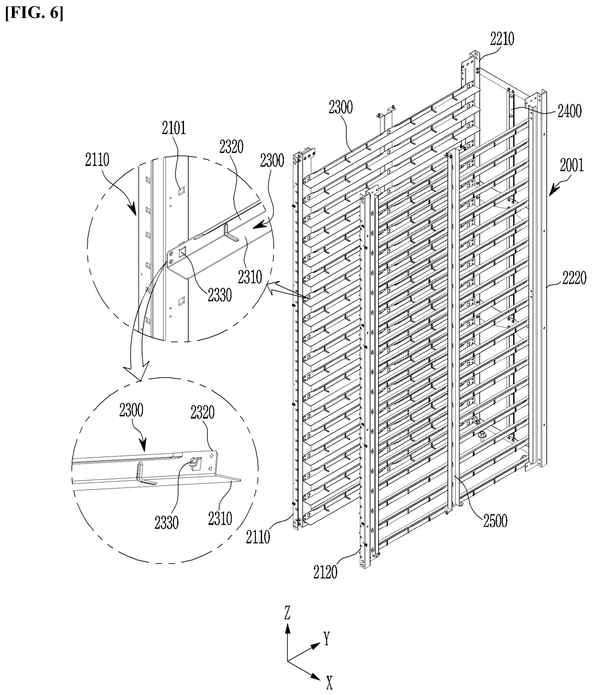

FIG. 2 is a perspective view of a battery rack according to an embodiment of the present disclosure. FIG. 3 is an XZ cross-sectional view taken along the cutting line A-A of FIG. 2. FIG. 4 is a top view of the battery rack according to FIG. 2. FIG. 5 is an XY cross-sectional view taken along the cutting line B-B of FIG. 2. FIG. 6 is a perspective view of a sub-rack included in the battery rack according to FIG. 2.

Referring to FIGS. 2 to 6, the battery rack 2000 of the present embodiment may have a structure with opened upper and lower ends. Compared to the conventional battery rack 20 shown in FIG. 1, the battery rack 2000 of the present embodiment may not include a plate-shaped member 25 that closes the upper end or the lower end. The battery rack 2000 has an open structure in this way, so that heat dissipation of the battery mounted on the battery rack 20 may be promoted, and the overall weight of the battery rack 2000 may be reduced.

The battery rack 2000 can be used in an energy storage system including a housing such as a container, and can be used in a fixed form within the container. When the energy storage system is distributed or sold in container units, it may be preferable that the weight and volume of other structures excluding the batteries are minimized in order to mount a large number of batteries inside the container. In addition, when the volume or weight of structures other than the batteries is reduced even if the same number of batteries are loaded, the effects such as reducing transportation cost can be achieved. The battery rack 2000 of the present embodiment can achieve structural simplification by eliminating the conventional plate-shaped member 25, thereby improving the energy density of the energy storage system including the battery rack 2000 and reducing transportation cost.

The battery rack 2000 may include two sub-racks 2001. The battery rack 2000 may have a structure in which two sub-racks 2001 are integrated. The two sub-racks 2001 are coupled with each other, so that the structural rigidity and seismic performance of the battery rack 2000 can be improved. In this way, the battery rack 2000 of the present embodiment may eliminate the conventional plate-shaped member 25 and have an integrated structure including at least two sub-racks 2001, thereby achieving the rigidity and seismic performance required for the battery rack 2000. Meanwhile, as mentioned below, the battery rack 2000 may include three or more sub-racks 2001.

Meanwhile, prior to the description, the battery rack 2000 can be described as having a length, a depth, and a height.

Here, the length of the battery rack 2000 may be a size on the X-axis. The depth of the battery rack 2000 may be a size on the Y-axis. The height of the battery rack 2000 may be a size on the Z-axis. Here, the length, depth, and height of the sub-rack 2001 included in the battery rack 2000 may also be described as being sizes on the X-axis, Y-axis, and Z-axis as described above.

Further, both sides in the longitudinal direction (X-axis direction) of the battery rack 2000 may be referred to as the left side (-X-axis direction) and the right side (+X-axis direction). Both sides in the depth direction of the battery rack 2000 may be referred to as the front side (-Y-axis direction) and the rear side (+Y-axis direction). Both sides in the height direction of the battery rack 2000 may be referred to as the upper side (+Z-axis direction) and the lower side (-Z-axis direction). Here, the left and right, front and back, and up and down of the sub-rack 2001 may also be described in this manner.

The greater the number of sub-racks 2001 included in the battery rack 2000, the greater the length value of the battery rack 2000. Further, the height value of the battery rack 2000 may correspond to the length of the columns 2100 and 2200 included in the sub-rack 2001. The height value of the battery rack 2000 may correspond to the number of batteries that can be loaded in the sub-rack 2001. Further, the depth value of the battery rack 2000 may correspond to the length of the bracket 2300 included in the sub-rack 2001 or the size of the battery mounted on the battery rack 2000.

The sub-rack 2001 included in the battery rack 2000 of the present embodiment will be described below.

Respective sub-racks 2001 may include columns 2100 and 2200 configured to extend vertically, and brackets 2300 coupled to the columns 2100 and 2200 to form a housing space in which a battery is seated. In addition, respective sub-racks 2001 may further include a fixing post 2400 for stably fixing a battery inserted into the battery rack 2000.

The columns 2100 and 2200 may be frame structures extending in the height direction (Z-axis direction). The columns 2100 and 2200 may be frame structures extending in the vertical direction. The columns 2100 and 2200 may be vertically erected to form the overall shape of the sub-rack 2001. The columns 2100 and 2200 may also be referred to as vertical frames, vertical beams, etc. In addition, the columns 2100 and 2200 may also be referred to as main frames.

In the sub-rack 2001 of the present embodiment, a plurality of housing spaces may be located along the longitudinal direction of the columns 2100 and 2200, and a battery may be mounted in each housing space. In this way, the sub-rack 2001 that loads the batteries in the vertical direction may be referred to as a tower-type structure. Here, the longitudinal direction of the columns 2100 and 2200 may be the height direction (Z-axis direction) of the sub-rack 2001.

The columns 2100 and 2200 may include a front column 2100 located on the front side of the sub-rack 2001 and a rear column 2200 located on the rear side of the battery rack 2000. The front column 2100 and the rear column 2200 may be located spaced apart from each other in the depth direction (Y-axis direction) of the sub-rack 2001. The front column 2100 and the rear column 2200 may be located to correspond to each other.

The number of the front column 2100 may be two. The number of the rear column 2200 may be two. A pair of front columns 2100 may be located spaced apart from each other in the longitudinal direction (X-axis direction) of the sub-rack 2001. A pair of rear columns 2200 may be located spaced apart from each other in the longitudinal direction (X-axis direction) of the sub-rack 2001. A distance at which the pair of front columns 2100 are spaced apart from each other and a distance at which the pair of rear columns 2200 are spaced apart from each other may be the same. The pair of front columns 2100 and the pair of rear columns 2200 may be respectively located to correspond to each other. Thereby, in the cross section of the sub-rack 2001 shown in FIG. 5, the two front columns 2100 and the two rear columns 2200 may be located at each vertex of a rectangle as a whole.

The bracket 2300 may be a frame structure extending in a horizontal direction. The bracket 2300 may be a frame structure extending along the depth direction (Y-axis direction) of the sub-rack 2001. The bracket 2300 may extend between the front column 2100 and the rear column 2200.

The bracket 2300 may be a shelf-shaped structure on which a battery is seated. The axial cross section of the bracket 2300 may have an L-shape. The L-shaped bracket 2300 may include a horizontal surface 2310 and a vertical surface 2320 extending vertically from one end of the horizontal surface 2310. The horizontal surface 2310 of the bracket 2300 may support the lower surface of the battery upward. The vertical surface 2320 of the bracket 2300 may be located on the side surface of the battery, thereby preventing the battery from being separated from the bracket 2300. Here, the axial cross section may refer to a cross section that is vertical to the longitudinal axis of the corresponding structure. The longitudinal direction of the bracket 2300 may be the depth direction (Y-axis direction) of the sub-rack 2001.

The pair of brackets 2300 can form a housing space for the battery. A battery can be mounted on the pair of brackets 2300, and the pair of brackets 2300 can be located on both sides of the battery, thereby supporting the battery and preventing the battery from being separated. In the pair of brackets 2300 having symmetrical shape, each horizontal surface 2310 can support the lower surface of the battery from both sides, and each vertical surface 2320 can prevent the battery from being separated on the side surface of the battery. Here, a battery mounted on the sub-rack 2001 can be inserted from a front side to a rear side along the depth direction of the sub-rack 2001 on the bracket 2300.

The pair of brackets 2300 may extend between the pair of front columns 2100 and the pair of rear columns 2200. The pair of brackets 2300 may be located between the pair of front columns 2100 and the pair of rear columns 2200. The pair of brackets 2300 may be located on the same plane (XY plane). The pair of brackets 2300 may have shapes symmetrical with each other. The pair of brackets 2300 may have shapes symmetrical to the left and right. In other words, an axial cross section of one of the pair of brackets 2300 may have an L-shape, and an axial cross section of the other may have an inverted L-shape.

Specifically, the front column 2100 may include a first front column 2110 and a second front column 2120. The rear column 2200 may include a first rear column 2210 and a second rear column 2220. One of the pair of brackets 2300 may extend between the first front column 2110 and the first rear column 2210, and the other may extend between the second front column 2120 and the second rear column 2220.

The brackets 2300 extending between the front column 2100 and the rear column 2200 may be in a plurality. The plurality of brackets 2300 may be located at intervals along the height direction (Z-axis direction) of the columns 2100 and 2200. The plurality of brackets 2300 are located in succession along the height direction, so that a plurality of battery housing spaces may be formed along the columns 2100 and 2200 in the sub-rack 2001. Here, the interval between the plurality of brackets 2300 may be greater than the height value of the battery. The interval between the plurality of brackets 2300 may be the same.

Referring to FIG. 6, the bracket 2300 and the columns 2100 and 2200 can be coupled through a hooking structure. A protrusion 2330 can be provided at an end in the longitudinal direction of the bracket 2300. The protrusion 2330 can be formed at both ends in the longitudinal direction of the bracket 2300. The protrusion 2330 can be formed on a vertical surface 2320. The protrusion 2330 can be formed to extend from the rear surface of the vertical surface 2320 and protrude downward.

The front column 2100 or the rear column 2200 may be provided with a groove 2101 corresponding to the above-mentioned protrusion. The protrusion 2330 formed at the end of the bracket 2300 and the groove 2101 formed in the front column 2100 or the rear column 2200 are coupled, so that the bracket 2300 can be stably coupled to the columns 2100 and 2200. Here, the protrusion 2330 can be inserted into the groove 2101 in a downward direction (-Z-axis direction), whereby the protrusion 2330 of the bracket 2300 can be fitted into the groove 2101. Through this structure, the bracket 2300 can be more firmly fixed to the columns 2100 and 2200 as the load is applied downward. Accordingly, even after the battery is seated on the bracket 2300, the bracket 2300 can be prevented from being separated from the sub-rack 2001 structure.

The fixing post 2400 may be for stably fixing the battery to the sub-rack 2001. The fixing post 2400 may be located on the rear side of the sub-rack 2001. The fixing post 2400 may be located between the pair of rear columns 2200. The fixing post 2400 may correspond to the rear surface of the battery inserted from the front side to the rear side. The fixing post 2400 may be fixed to the rear surface of the battery.

The fixing post 2400 may be a frame structure extending in the height direction (Z-axis direction). The fixing post 2400 may be a frame structure extending in the vertical direction. The fixing post 2400 may be vertically erected along the loading direction of the battery, and may correspond to the rear surface of each battery.

Meanwhile, the fixing post 2400 may be connected to the rear column 2200 through the bridge 2410. Here, the fixing post 2400 may be provided as including a plurality of sub-posts, and each sub-post may be connected to the rear column 2200 through the bridge 2410.

Although not specifically shown in the figure, a hooking structure located at intervals may be formed on the fixing post 2400, and a separate structure corresponding to the hooking structure may be located on the rear surface of the battery. The rear surface of the battery and the fixing post 2400 are coupled through the hooking structure, so that the battery mounted on the battery rack 2000 or the sub-rack 2001 may be stably fixed.

The reinforcing post 2500 may be for improving the overall rigidity and seismic performance of the sub-rack 2001 or the battery rack 2000.

The reinforcing post 2500 may be located in parallel to the columns 2100 and 2200. The reinforcing post 2500 may be located between the front column 2100 and the rear column 2200. The reinforcing post 2500 may be located between the first front column 2110 and the first rear column 2210. The reinforcing post 2500 may be located between the second front column 2120 and the second rear column 2220. The reinforcing post 2500 may be a frame structure extending in the height direction (Z-axis direction). The reinforcing post 2500 may be a frame structure extending in the vertical direction.

The reinforcing post 2500 may be arranged to cross the central part of the plurality of brackets 2300, and may correspond to each bracket 2300. The reinforcing post 2500 may be coupled with the bracket 2300, thereby stably fixing the bracket 2300 and preventing separation and damage of the bracket 2300.

Here, the coupling between the reinforcing post 2500 and the bracket 2300 may be similar to that shown in FIG. 6. Therefore, the bracket 2300 may include a protrusion 2330 located at the center of the longitudinal direction of the bracket 2300, and a groove corresponding thereto may be formed in the reinforcing post 2500. The protrusion 2330 may have a shape that protrudes downward, and may be inserted into the groove of the reinforcing post 2500 toward the downward direction (-Z axis direction). Thereby, even if a battery is located on the bracket 2300, the protrusion 2330 may be stably coupled to the reinforcing post 2500.

A structure for connecting two sub-racks 2001 included in the battery rack 2000 of the present embodiment will be described below. The battery rack 2000 of the present embodiment can improve the overall rigidity and seismic performance of the battery rack 2000 by coupling two sub-racks 2001 with each other. The battery rack 2000 of the present embodiment has a structure with opened upper and lower ends, but two or more sub-racks 2001 are connected and support each other, thereby supplementing the overall rigidity of the battery rack 2000 and improving the seismic performance.

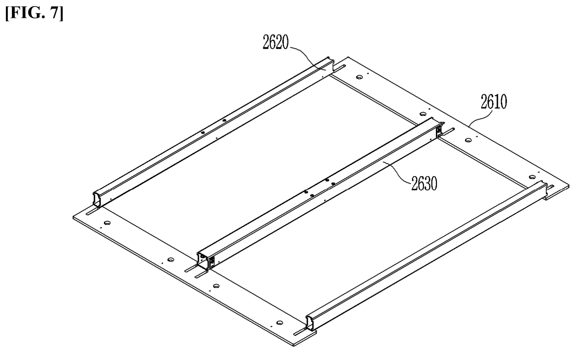

FIG. 7 is a perspective view of a support frame included in the battery rack according to FIG. 2.

The battery rack 2000 may be provided with a support frame 2600. The support frame 2600 may be for maintaining the overall shape of the battery rack 2000.

The support frame 2600 may be located at an upper end and a lower end of the battery rack 2000, respectively. The support frame 2600 is located at an upper end and a lower end of the battery rack 2000 and is coupled with the sub-rack 2001, thereby connecting at least two sub-racks 2001.

For convenience of explanation, the two sub-racks 2001 included in the battery rack 2000 are hereinafter referred to as the first sub-rack 2001a and the second sub-rack 2001b, respectively. Here, the first sub-rack 2001a and the second sub-rack 2001b may be arranged along the longitudinal direction of the battery rack 2000.

The support frame 2600 may include a pair of horizontal frames 2610 extending in the longitudinal direction (X-axis direction) of the battery rack 2000, and beams 2620 and 2630 extending between the pair of horizontal frames 2610 and vertical to the pair of horizontal frames 2610. Here, the beams 2620 and 2630 may include a side beam 2620 and a middle beam 2630. The side beam 2620 may correspond to an end of the pair of horizontal frames 2610. The middle beam 2630 may not correspond to an end of the pair of horizontal frames 2610.

Conventionally, since a plate-shaped member 25 is included in the battery rack 2000, the columns 21 and 22 were fixed to the plate-shaped member 25 for structural stability. However, in the present embodiment, instead of the plate-shaped member 25, the positions of the columns 2100 and 2200 may be fixed through a support frame 2600.

More specifically, the sub-rack 2001 may include a pair of front columns 2100 and a pair of rear columns 2200, and in order to stably fix the pair of front columns 2100 and the pair of rear columns 2200, a structure for fixing the columns 2100 and 2200 in the depth direction (Y-axis direction) and the length direction (X-axis direction) may be required. In this embodiment, the columns 2100 and 2200 spaced apart in the longitudinal direction (X-axis direction) may be fixed by the horizontal frame 2610, and the columns 2100 and 2200 spaced apart in the depth direction (Y-axis direction) may be fixed by the beams 2620 and 2630. In addition, the beams 2620 and 2630 may be supported by the reinforcing post 2500, also called as a reinforcing frame 2500 below. Even if the plate-shaped member 25 is eliminated in this way, the overall structure of the sub-rack 2001 or the battery rack 2000 can be maintained through the reinforcing frame 2500 and the support frame 2600.

The horizontal frame 2610 may be for forming the overall shape of each sub-rack 2001. The horizontal frame 2610 may be a frame structure extending in the longitudinal direction (X-axis direction) of the sub-rack 2001 or the battery rack 2000.

The columns 2100 and 2200 included in the sub-rack 2001 may be coupled to the horizontal frame 2610. The horizontal frame 2610 may be arranged to cross two columns 2100 and 2200 spaced apart in the longitudinal direction (X-axis direction) of the sub-rack 2001. The horizontal frame 2610 can extend between the pair of front columns 2100 spaced apart in the longitudinal direction (X-axis direction). The horizontal frame 2610 can extend between the pair of rear columns 2200 spaced apart in the longitudinal direction (X-axis direction). The pair of front columns 2100 or the pair of rear columns 2200 are fixed to the horizontal frame 2610, so that the overall shape of the sub-rack 2001 can be maintained.

The horizontal frame 2610 may be in a plurality. The horizontal frame 2610 may be provided at a front side and a rear side or at an upper end and a lower end of the sub-rack 2001, thereby maintaining the overall shape of the sub-rack 2001.

In the support frame 2600 located at the upper end of the battery rack 2000, the horizontal frame 2610 can be located on the front side and the rear side of the sub rack 2001, respectively. One of the pair of horizontal frames 2610 can be coupled to one end of the pair of front columns 2100 of the sub-rack 2001, and the other can be coupled to one end of the pair of rear columns 2200 of the sub-rack 2001. In addition, in the support frame 2600 located at the lower end, the pair of horizontal frames 2610 can be coupled to the other ends of the pair of front columns 2100 and the pair of rear columns 2200.

The horizontal frame 2610 can be connected to at least two sub-racks 2001. The first sub-rack 2001a and the second sub-rack 2001b can be coupled through the horizontal frame 2610. In other words, the horizontal frame 2610 may not be provided in each sub-rack 2001, and may be provided as a unit of the battery rack 2000. The first sub-rack 2001a and the second sub-rack 2001b can share the horizontal frame 2610 provided in the battery rack 2000.

Therefore, in the support frame 2600 located at the upper end of the battery rack 2000, one of the pair of horizontal frames 2610 may be coupled to one end of the pair of front columns 2100 of the first sub-rack 2001a and the second sub-rack 2001b. The other of the pair of horizontal frames 2610 may be coupled to one end of one of the pair of rear columns 2200 of the first sub-rack 2001a and the second sub-rack 2001b.

In this way, each of the horizontal frames 2610 can be coupled to one end of the front column 2100 or the rear column 2200 of the first sub-rack 2001a and the second sub-rack 2001b, thereby coupling the first sub-rack 2001a and the second sub-rack 2001b.

The beams 2620 and 2630 may be vertical to the pair of horizontal frames 2610, and may extend between the pair of horizontal frames 2610. The beams 2620 and 2630 may include a side beam 2620 that corresponds to an end of the horizontal frame 2610 and a middle beam 2630 that does not correspond to an end of the horizontal frame 2610.

The end of the side beam 2620 may correspond to the end of the horizontal frame 2610. The side beam 2620 may be provided as a pair. Both ends of one of the pair of side beams 2620 may correspond to one end of the pair of horizontal frames 2610, respectively, and both ends of the other of the pair of side beams 2620 may correspond to the other end of the pair of horizontal frames 2610, respectively. The pair of side beams 2620 and the pair of horizontal frames 2610 may be orthogonal to each other. The pair of side beams 2620 and the pair of horizontal frames 2610 may form a square shape by coupling the respective ends. In this way, the overall structure of the support frame 2600 may be formed through the horizontal frame 2610 and the side beams 2620.

The middle beam 2630 may be located between a pair of side beams 2620. The middle beam 2630 may be located between sub-racks 2001 connected to the horizontal frame 2610. More specifically, when two sub-racks 2001 are coupled to the horizontal frame 2610, the middle beam 2630 may be located at the abutting position of each sub-rack 2001. The middle beam 2630 may simultaneously correspond to two sub-racks 2001 that are located adjacent to each other. In addition, when three sub-racks 2001 are coupled to the horizontal frame 2610, two middle beams 2630 may be provided so as to be located between two adjacent sub-racks 2001. Therefore, the thickness value of the middle beam 2630 may be greater than the thickness value of the side beam 2620.

Meanwhile, in the above description, the middle beam 2630 was described as being separate from the side beam 2620, but depending on the design, the middle beam 2630 may be provided in a form in which two side beams 2620 are coupled.

In this case, the two side beams 2620 included in the middle beam 2630 may correspond to the first sub-rack 2001a and the second sub-rack 2001b, respectively. Also, in this case, it can be described that a total of four side beams 2620 are provided in the structure where the first sub-rack 2001a and the second sub-rack 2001b are coupled, wherein two of the four side beams 2620 may correspond to the first sub-rack 2001a, and the other two may correspond to the second sub-rack 2001b. Therefore, in this case, the side beams 2620 may be explained as being located at an upper end and a lower end on the left side and right side of the sub-rack 2001, respectively. In this case, the side beam 2620 can be described as a configuration that is individually included in the sub- rack 2001.

The beams 2620 and 2630 can fix two columns 2100 and 2200 spaced apart in the depth direction (Y-axis direction) of the sub-rack 2001, thereby maintaining the overall shape of the sub-rack 2001. The beams 2620 and 2630 can be a frame structure extending in the horizontal direction. The beams 2620 and 2630 can be a frame structure extending in the depth direction (Y-axis direction) of the sub-rack 2001.

The beams 2620 and 2630 can be extended between the front column 2100 and the rear column 2200. The ends of the beams 2620 and 2630 can be coupled to the ends of the front column 2100 and the rear column 2200.

The beams 2620 and 2630 may be parallel to the bracket 2300. The beams 2620 and 2630 may fix both ends of the front column 2100 and the rear column 2200 to which the bracket 2300 is connected, thereby preventing the distortion of the front column 2100 and the rear column 2200 and the separation of the bracket 2300.

The beams 2620 and 2630 can be coupled with the reinforcing posts 2500. The support frames 2600 can be respectively located at the upper end and the lower end of the battery rack 2000. The upper support frame 2600 and the lower support frame 2600 can be arranged side by side in the height direction. One end of the reinforcing frame 2500 can be connected to the beams 2620 and 2630 included in the upper support frame 2600, and the other end can be connected to the beams 2620 and 2630 included in the lower support frame 2600. The support frames 2600 located at the upper end of the battery rack 2000 and the support frames 2600 located at the lower end can be further connected through the reinforcing frame 2500, and the stress applied to the support frames 2600 can be distributed.

Here, the reinforcing frame 2500 can be coupled with the central part of the beams 2620 and 2630. The reinforcing frame 2500 is coupled with the central part of the beams 2620 and 2630, so that the force applied to the battery rack 2000 can be evenly distributed.

Meanwhile, a reinforcing frame 2500 may be coupled between the upper side beam 2620 and the lower side beam 2620. For example, the side beam 2620 located on the left side of the support frame 2600 may be connected to the reinforcing frame 2500 located between the first front column 2110 and the first rear column 2210 of the first sub-rack 2001a. The side beam 2620 located on the right side may be connected to the reinforcing frame 2500 located between the second front column 2120 and the second rear column 2220 of the second sub-rack 2001b.

On the other hand, two reinforcing frames 2500 may be coupled between the upper middle beam 2630 and the lower middle beam 2630. The middle beam 2630 may be located between the first sub-rack 2001a and the second sub-rack 2001b. The middle beam 2630 may be connected to a reinforcing frame 2500 located between the second front column 2120 and the second rear column 2220 of the first sub-rack 2001a, and may be connected to a reinforcing frame 2500 located between the first front column 2110 and the first rear column 2210 of the second sub-rack 2001b. This can be more easily explained through the cross-sectional view of FIG. 5. However, when the middle beam 2630 is provided in the form in which two side beams 2620 are coupled as described above, it can be explained that one reinforcing frame 2500 is coupled to each side beam 2620 included in the middle beam 2630.

Meanwhile, the battery rack 2000 of the present embodiment may include a connection block 2700 for stable coupling of the first sub-rack 2001a and the second sub-rack 2001b.

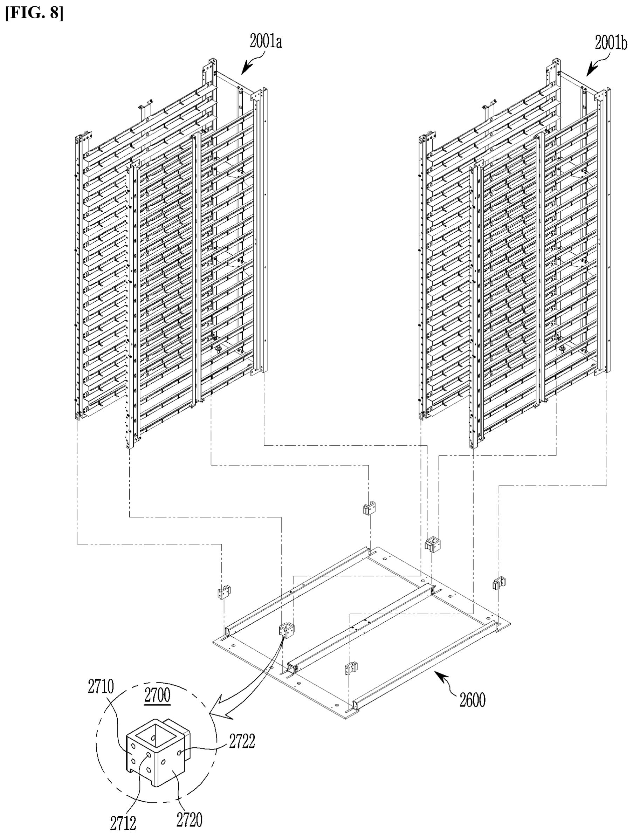

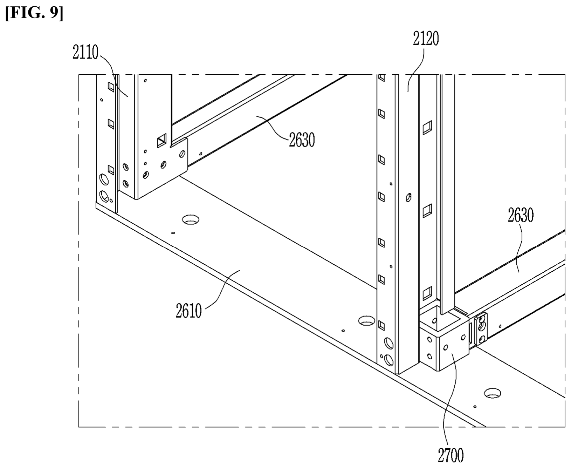

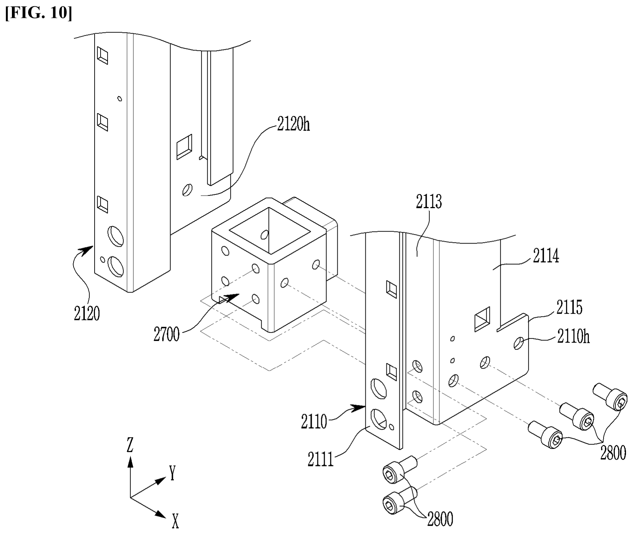

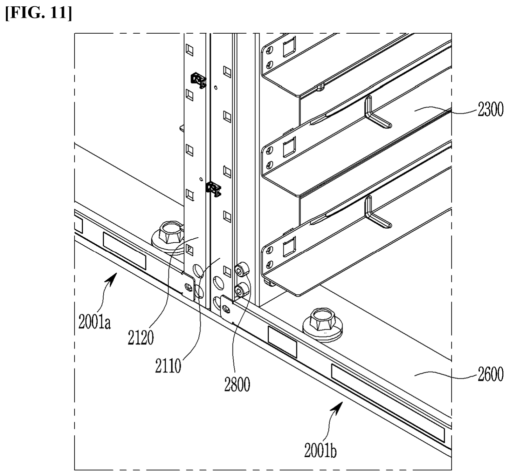

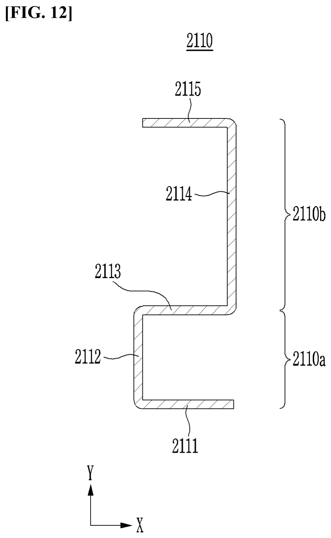

FIG. 8 is a diagram for explaining the coupling of a sub-rack, a support frame, and a connection block included in the battery rack according to FIG. 2. FIG. 9 is a diagram showing a state where a sub-rack and a connection block are located on a support frame included in a battery rack according to FIG. 2. FIG. 10 is a diagram for explaining the coupling of the connection block and the column in the battery rack according to FIG. 2. FIG. 11 is an enlarged diagram of the coupling portion of the sub-rack in the battery rack according to FIG. 2. FIGS. 12 to 14 are axial cross-sections of the column of the battery rack according to FIG. 2.

Referring to FIGS. 8 to 14, the connection block 2700 included in the battery rack 2000 of the present embodiment may be located between the first sub-rack 2001a and the second sub-rack 2001b.

The connection block 2700 can be connected to the first sub-rack 2001a and the second sub-rack 2001b. One side of the connection block 2700 can correspond to the first sub-rack 2001a. The other side of the connection block 2700 can correspond to the second sub-rack 2001b. Here, when the first sub-rack 2001a is located on the left side of the second sub-rack 2001b, one side may be described as the left side and the other side may be described as the right side. Further, when the first sub-rack 2001a is located on the right side of the second sub-rack 2001b, one side may be described as the right side and the other side may be described as the left side.

The connection block 2700 can be located between the columns 2100 and 2200 of the first sub-rack 2001a and the columns 2100 and 2200 of the second sub-rack 2001b. The connection block 2700 can be coupled to the columns 2100 and 2200 of the first sub-rack 2001a and the columns 2100 and 2200 of the second sub-rack 2001b. Here, the columns 2100 and 2200 of the first sub-rack 2001a may be referred to as the first column, and the columns 2100 and 2200 of the second sub-rack 2001b may be referred to as the second column.

The connection block 2700 may be connected to the first column and the second column. One side of the connection block 2700 may correspond to the first column, and the other side may correspond to the second column. One side of the connection block 2700 may be coupled to the first column. The other side of the connection block 2700 may be coupled to the second column.

Meanwhile, referring to FIGS. 9 and 10, the first column may be the second front column 2120 of the first sub-rack 2001a, and the second column may be the first front column 2110 of the second sub-rack 2001b. However, it should be noted in advance that the first column and the second column referred to therein refer to respective columns adjacent to each other in the first sub-rack 2001a and the second sub-rack 2001b, and may refer to columns 2100 and 2200 in positions different from those shown.

Meanwhile, referring to FIG. 8, the connection block 2700 may be provided in the columns 2100 and 2200 of the first sub-rack 2001a and the second sub-rack 2001b located outside the battery rack 2000, in addition to the coupling position of the first sub-rack 2001a and the second sub-rack 2001b. Here, the connection block 2700 may correspond to one of the columns 2100 and 2200, and may be half the size compared to the connection block 2700 provided at the coupling position.

As shown in FIG. 8, the connection block 2700 may have a shape of a square tube as a whole. The connection block 2700 may include a front surface 2710 located on the front side of the battery rack 2000, and two side surfaces 2720 extending vertically from the front surface 2710 from opposing edges of the front surface 2710. Here, the side surfaces 2720 may be two surfaces facing each other in the longitudinal direction (X-axis direction) of the battery rack 2000.

Referring to FIGS. 8 to 11, one side of the front surface 2710 may correspond to the first column 2120 (see FIG. 10) of the first sub-rack 2001a, and the other side may correspond to the second column 2110 (see FIG. 10) of the second sub-rack 2001b.

The front surface 2710 may include a front fastening hole 2712. The front fastening hole 2712 located at one side of the front surface 2710 may correspond to the first column 2120 (see FIG. 10) of the first sub-rack 2001a. The front fastening hole 2712 located at the other side of the front surface 2710 may correspond to the second column 2110 (see FIG. 10) of the second sub-rack 2001b. The first sub-rack 2001a and the second sub-rack 2001b may have holes 2120h and 2110h (see FIG. 10) formed at positions corresponding to the front fastening holes 2712. The fastening member 2800 may be inserted in a state where the holes 2120h and 2110h formed in the sub-rack 2001 and the front fastening hole 2712 correspond to each other, thereby coupling the sub-rack 2001 and the connection block 2700.

More specifically, the number of front fastening holes 2712 may be four, and the four front fastening holes 2712 may be located at each vertex of an imaginary square. Two front fastening holes 2712 located at one side may correspond to the first column 2120 (see FIG. 10) of the first sub-rack 2001a, and two front fastening holes 2712 located at the other side may correspond to the second column 2110 (see FIG. 10) of the second sub-rack 2001b.

Meanwhile, unlike those described above, the number of front fastening holes 2712 may be two. One of the front fastening holes 2712 spaced apart in the longitudinal direction (X-axis direction) may correspond to the first column 2120 (see FIG. 10) of the first sub-rack 2001a, and the other may correspond to the second column 2110 (see FIG. 10) of the second sub-rack 2001b. However, in order to ensure stable coupling between the sub-rack 2001 and the connection block 2700, it may be desirable for at least two fastening members to be connected, whereby it may be preferable for four or more front fastening holes 2712 to be provided.

The side surface 2720 may include a side fastening hole 2722. The side surface 2720 located at one side of the two side surfaces 2720 facing each other may correspond to the first column 2120 (see FIG. 10) of the first sub-rack 2001a, and the side surface 2720 located at the other side may correspond to the second column 2110 (see FIG. 10) of the second sub-rack 2001b. One or more side fastening holes 2722 may be formed on each side surface 2720, and holes 2120h and 2110h may be formed on each sub-rack 2001 at a position corresponding to the side fastening hole 2722. The fastening member 2800 may be inserted in a state where the holes 2120h and 2110h formed in the sub-rack 2001 and the side fastening holes 2722 correspond to each other, thereby coupling the sub-rack 2001 and the connection block 2700. The number of side fastening holes 2722 is not limited, but it may be preferable that two or more are formed on each side surface 2720 for stable coupling with the sub-rack 2001. Here, the fastening member 2800 may be a bolt, a nut, a washer, or the like.

Meanwhile, FIG. 10 shows that the number of the side fastening holes 2722 is two, but the number of the holes 2120h and 2110h and fastening members 2800 of the sub-rack 2001 are three, respectively. Here, two of the three holes 2120h and 2110h correspond to the side fastening holes 2722, and the remaining one can be used for coupling with another structure. As a specific example, the other hole 2120h and 2110h and one fastening member 2800 can be used for coupling with the beams 2620 and 2630.

The rear surface of the connection block 2700 may have a shape that protrudes slightly toward the rear side, which may be for stable coupling with the beams 2620 and 2630. The rear surface of the connection block 2700 can be located in a state of abutting with the beams 2620 and 2630. Two of the three holes 2120h and 2110h formed in the sub-rack 2001 correspond to the connection block 2700, and the remaining one corresponds to the beams 2620 and 2630. In this way, the first column 2120 (see FIG. 10) of the first sub-rack 2001a and the second column 2110 (see FIG. 10) of the second sub-rack 2001b may be coupled with the connection block 2700 and the beams 2620 and 2630.

In the above, it has been described with reference to FIGS. 8 to 11 that the connection block 2700 is located between the second front column 2120 of the first sub-rack 2001a and the first front column 2110 of the second sub-rack 2001b, and that they are coupled. However, this description can also be applied to the coupling between the second rear column 2220 of the first sub-rack 2001a and the first rear column 2210 of the second sub-rack 2001b. Further, if the battery rack 2000 of the present embodiment further includes a third sub-rack, it can also be applied to the coupling between the first sub-rack 2001a or the second sub-rack 2001b and the third sub-rack. Therefore, detailed description thereof will be omitted.

As shown in FIGS. 12 to 14, the columns 2100 and 2200 may be provided in a form in which the plate-shaped material is continuously curbed forward and backward (Y-axis direction) or left and right (X-axis direction), whereby the axial cross section of the columns 2100 and 2200 may have a shape including a plurality of curbed parts. In this way, the columns 2100 and 2200 are formed to include a plurality of edges, thereby minimizing the weight per volume occupied by the columns 2100 and 2200 and ensuring structural rigidity. The cross-sectional shape of the columns 2100 and 2200 may also be referred to as an S-shape or an inverted S-shape.

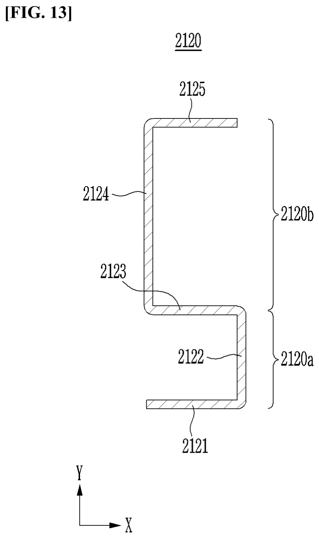

Referring to FIGS. 12 and 13, a pair of front columns 2100 may have shapes symmetrical to the left and right.

More specifically, the front column 2100 may include a first front column 2110 and a second front column 2120. As shown in FIG. 12, the first front column 2110 may include an outside curved part 2110a that is curved toward the outside of the sub-rack 2001 and an inside curved part 2110b that is curved toward the inside of the sub- rack 2001. In this case, the outside curved part 2110a may be located relatively in front of the inside curved part 2110b. As shown in FIG. 13, the second front column 2120 may include an outside curved part 2120a that is curved toward the outside of the sub-rack 2001 and an inside curved part 2120b that is curved toward the inside of the sub-rack 2001. In this case, the outside curved part 2120a may be located relatively in front of the inside curved part 2120b.

Here, the inside may be a direction toward the inside of the sub-rack 2001 including the front column 2100, and the outside may be a direction toward the outside of the sub-rack 2001. The first front column 2110 may be located on the left side (-X-axis direction) of the second front column 2120. In one sub-rack 2001, the inside of the first front column 2110 may be in the +X-axis direction, and the inside of the second front column 2120 may be in the -X-axis direction. In this way, the inside and the outside of the first front column 2110 and the second front column 2120 may be opposite to each other, whereby the first front column 2110 and the second front column 2120 may have shapes symmetrical with each other.

Meanwhile, although not specifically shown in the figure, the rear column 2200 may have a front/rear symmetric shape with the front column 2100. The first rear column 2210 may have a front/rear symmetric shape with the first front column 2110. The second rear column 2220 may have a front/rear symmetric shape with the second front column 2120. Therefore, in the rear column 2200, the inside curved part may be located relatively in front of the outside curved part. Meanwhile, the pair of rear columns 2200 may have shapes that are left/right symmetrical each other. The cross-sectional shape of the rear column 2200 can be understood through FIGS. 12 and 13, and thus, detailed description thereof is omitted.

The columns 2100 and 2200 of the present embodiment may include a plurality of surfaces separated by edges of the curbed positions.

As shown in FIG. 12, the first front column 2110 may include a first surface 2111 to a fifth surface 2115. The first surface 2111 to the fifth surface 2115 are located vertically to the adjacent surfaces, and may be curbed in the same direction as or opposite to the curbed direction of the adjacent surfaces. Thereby, the first surface 2111, the second surface 2112, and the third surface 2113 may form an outside curved part 2110a that is curved toward the outside (-X-axis direction), and may have an open shape toward the inside (+X-axis direction). Further, the third surface 2113, the fourth surface 2114, and the fifth surface 2115 may form an inside curved part 2110b that is curved toward the inside (+X-axis direction), and may have an open shape toward the outside (-X-axis direction).

The first surface 2111 is located in front of the battery rack 2000, and may provide a coupling surface with the battery. Since an empty space is formed on the rear side of the first surface 2111 by the outside curved part 2110a, even when the battery and the first surface 2111 are coupled by a bolt or the like, the worker can easily access the coupling position. The first surface 2111 may also be referred to as the front surface of the first front column 2110.

As shown in FIG. 13, the second front column 2120 may include a first surface 2121 to a fifth surface 2125. The first surface 2121, the second surface 2122, and the third surface 2123 may form an outside curved part 2120a that is curved toward the outside (in the +X-axis direction), and may have an open shape toward the inside (in the -X-axis direction). In addition, the third surface 2123, the fourth surface 2124, and the fifth surface 2125 may form an inside curved part 2120b that is curved toward the inside (in the -X-axis direction), and may have an open shape toward the outside (in the +X-axis direction). The structure of the second front column 2120 can be explained through FIG. 13 and the above-described contents, and thus, detailed description thereof will be omitted. In addition, the structure of the rear column 2200 can also be explained through FIG. 12 and FIG. 13, and thus, detailed description thereof will be omitted.

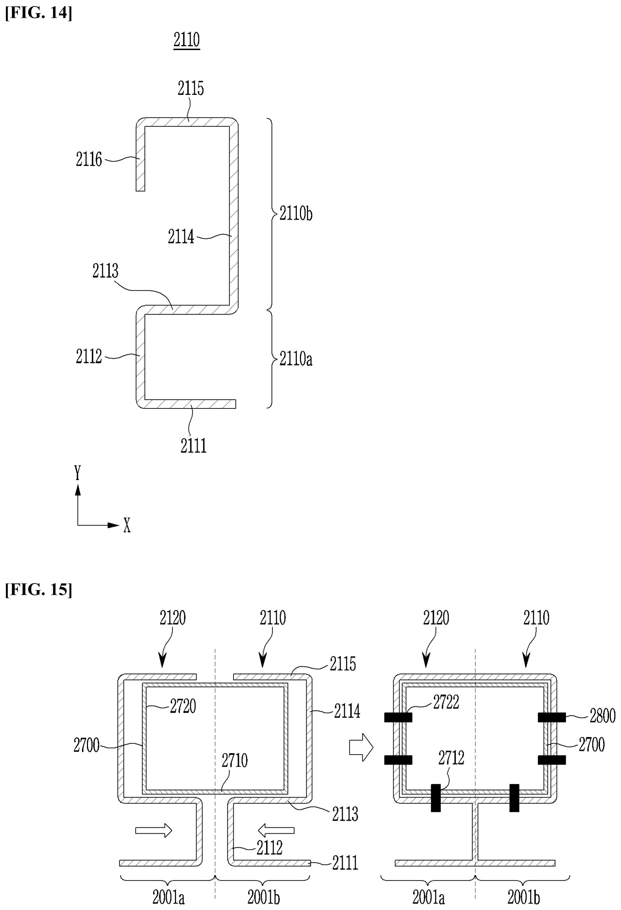

Meanwhile, referring to FIG. 14, the columns 2100 and 2200 of the present embodiment may include a sixth surface 2116. If the columns 2100 and 2200 includes a sixth surface 2116, the structural rigidity of the columns 2100 and 2200 can be further supplemented.

FIGS. 15 to 17 are diagrams for explaining the coupling of the column and the connection block in the battery rack according to FIG. 2.

Referring to FIG. 15, a connection block 2700 may be located between the inside curved part 2120b of the second front column 2120 and the inside curved part 2110b of the first front column 2110. Here, the second front column 2120 may be included in the first sub-rack 2001a, and the first front column 2110 may be included in the second sub-rack 2001b. The second front column 2120 may be the first column, and the first front column 2110 may be the second column.

More specifically, the front surface 2710 of the connection block 2700 is located adjacent to the third surface 2123 of the second front column 2120 and the third surface 2113 of the first front column 2110, and a fastening member 2800 is inserted into the front fastening hole 2712 formed in the front surface 2710, so that the front surface 2710 of the connection block 2700, the third surface 2123 of the second front column 2120 and the third surface 2113 of the first front column 2110 can be coupled.

In addition, both side surfaces 2720 of the connection block are located adjacent to the fourth surface 2124 of the second front column 2120 and the fourth surface 2114 of the first front column 2110, respectively, and a fastening member 2800 is inserted into the side fastening hole 2722 formed in the side surface 2720, so that both side surfaces 2720 of the connection block and the fourth surface 2124 of the second front column 2120 and the fourth surface 2114 of the first front column 2110 can be coupled.

In this way, the connection block 2700 is located between the second front column 2120 of the first sub-rack 2001a and the first front column 2110 of the second sub-rack 2001b, and the connection block 2700 is coupled to the second front column 2120 and the first front column 2110, respectively, so that the first sub-rack 2001a and the second sub-rack 2001b can be coupled. Thereby, the overall structure of the battery rack 2000 can be stabilized, and the seismic performance can be improved by the first sub-rack 2001a and the second sub-rack 2001b supporting each other.

Meanwhile, FIG. 15 shows that the second front column 2120 and the first front column 2110 with the connection blocks 2700 in between are coupled by moving closer to each other. However, moving the columns 2100 and 2200 with a large weight and volume with the connection blocks 2700 with a relatively small size can be a difficult task.

Therefore, it may be easier to locate the second front column 2120 of the first sub-rack 2001a and the first front column 2110 of the second sub-rack 2001b at the installation site, and then insert the connection block 2700 between the second front column 2120 and the first front column 2110.

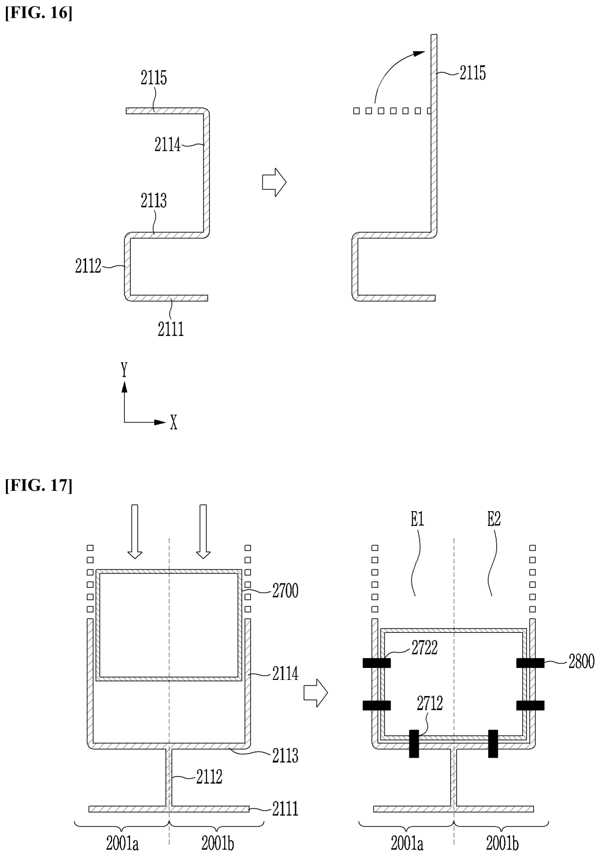

Referring to FIG. 16 and FIG. 17, a part of the front column 2100 can be removed or modified to facilitate the insertion of the connection block 2700.

As shown in FIG. 16, the fifth surface 2115 of the first front column 2110 may be partially removed or deformed. Here, the fifth surface 2115 may also be referred to as the rear surface of the first front column 2110. As shown in FIG. 17, the fifth surface 2115 may be partially removed or deformed, so that an opening E1 capable of entering an inside curved part 2110b may be formed on a rear surface of the first front column 2110. The fifth surface 2125 of the second front column 2120 may also be partially removed or deformed, so that an opening E2 capable of entering the inside curved part 2120b of the second front column 2120 may be formed. The connection block 2700 may be located between the first sub-rack 2001a and the second sub-rack 2001b through the openings E1 and E2 formed in the first front column 2110 and the second front column 2120.

Here, the fifth surface 2115 may have a narrow and long shape extending along one direction. Here, since the connection block 2700 corresponds to the end of the first front column 2110, it is not necessary to deform or remove the fifth surface 2115 as a whole, and it may be preferable that only the position corresponding to the connection block 2700 among the fifth surfaces 2115 be partially deformed or removed. Referring to FIG. 10 described above, a protruding structure is confirmed at both ends of the first front column 2110, and this protruding portion may correspond to the deformed fifth surface 2115 in FIG. 16 and FIG. 17. Here, three holes may be formed in the deformed surface, two of which may correspond to the side fastening holes 2722 of the connection block 2700. In addition, the remaining one of the three holes can be used for connection with the beams 2620 and 2630.

Meanwhile, in FIG. 16 and FIG. 17, a part of the fifth surface 2115 is located on the same plane as the fourth surface 2114, thereby forming the openings E1 and E2 through which the connection block 2700 can be inserted. However, unlike the same, it is also possible to remove a part of the fifth surface 2115.

In addition, a plurality of the connection blocks 2700 may be provided on the battery rack 2000. The connection blocks 2700 may be provided at both ends of the front column 2100 and at both ends of the rear column 2200. The connection blocks 2700 are provided at the front, rear, upper and lower ends, respectively, at the position where the first sub-rack 2001a and the second sub-rack 2001b abut on each other, whereby the first sub-rack 2001a and the second sub-rack 2001b can be stably fixed, thereby improving the rigidity and seismic performance of the battery rack 2000.

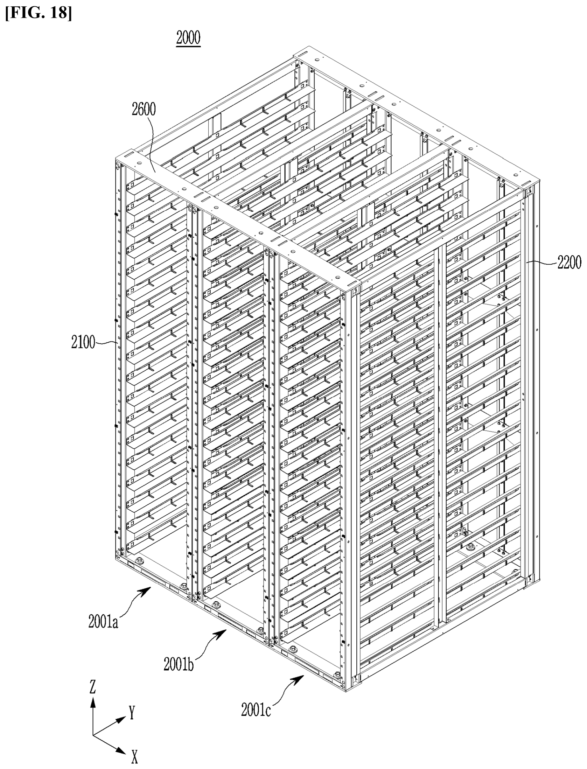

FIG. 18 is a diagram showing another form of the battery rack according to an embodiment of the present disclosure.

Referring to FIG. 18, the battery rack 2000 of the present embodiment may include a first sub-rack 2001a, a second sub-rack 2001b, and a third sub-rack 2001c. The battery rack 2000 may have improved rigidity and seismic performance by including three or more sub-racks 2001.

The third sub-rack 2001c may be located adjacent to the second sub-rack 2001b along the direction from the first sub-rack 2001a to the second sub-rack 2001b. The first sub-rack 2001a, the second sub-rack 2001b, and the third sub-rack 2001c may be located side by side along the longitudinal direction (X-axis direction) of the battery rack 2000.

The third sub-rack 2001c may have a structure similar to the first sub-rack 2001a and the second sub-rack 2001b. The coupling of the second sub-rack 2001b and the third sub-rack 2001c may be explained through the coupling of the first sub-rack 2001a and the second sub-rack 2001b described above. Further, the battery rack 2000 of FIG. 18 can be explained through the contents of the battery rack 2000 of FIG. 2 described above, except that the columns 2100 and 2200 of the first sub-rack 2001a, the second sub-rack 2001b, and the third sub-rack 2001c are connected to each support frame 2600, and therefore, detailed description thereof is omitted.

Meanwhile, the battery rack of the present embodiment can be applied to an energy storage system. The energy storage system can have a battery rack inside a housing such as a container, and store a battery in the housing space of the battery rack. In this way, the energy storage system can include at least one battery rack of the present embodiment.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

2000: battery rack
2100: front column
2110: first front column
2120: second front column
2200: rear column
2210: first rear column
2220: second rear column
2300: bracket
2400: fixing post
2500: reinforcing frame
2600: horizontal frame
2700: connection block
2800: fastening member

## Claims

1. A battery rack for housing a battery, the battery rack comprising:
a first sub-rack that includes a first column that is vertically erected, and includes a plurality of battery housing spaces formed along the first column, and
a second sub-rack that includes a second column that is vertically erected, and includes a plurality of battery housing spaces formed along the second column,
wherein the first sub-rack and the second sub-rack are arranged along the longitudinal direction of the battery rack, and
wherein the first sub-rack and the second sub-rack have a structure with an opened upper end.

2. The battery rack of claim 1, wherein:
the battery rack further comprises a horizontal frame extending along the longitudinal direction of the battery rack,
wherein the horizontal frame is vertical to the first column and the second column, and
the horizontal frame is coupled with an end of the first column and an end of the second column.

3. The battery rack of claim 1, wherein:
the first column and the second column are located adjacent to each other, and
the first column and the second column are coupled through a connection block located between the first column and the second column.

4. The battery rack of claim 3, wherein:
one side of the connection block is coupled with the first column, and
the other side of the connection block is coupled with the second column.

5. The battery rack of claim 3, wherein:
the connection block has a shape of a square tube, and
the connection block comprises a front surface located in front of the battery rack, and one side surface and the other side surface extending vertically from two opposing edges of the front surface toward the rear of the battery rack,
wherein the one side surface is coupled with the first column, and
the other side surface is coupled with the second column.

6. The battery rack of claim 5, wherein:
the front surface is coupled with the first column and the second column.

7. The battery rack of claim 6, wherein:
at least two front fastening holes are formed on the front surface of the connection block,
wherein one of the two front fastening holes located at one side corresponds to the first column, and
the other of the two front fastening holes located at the other side corresponds to the second column.

8. The battery rack of claim 6, wherein:
four front fastening holes are formed on the front surface of the connection block, and
the four front fastening holes are located at each vertex of an imaginary square,
wherein two of the four front fastening holes located at one side correspond to the first column, and
two of the four front fastening holes located at the other side correspond to the second column.

9. The battery rack of claim 5, wherein:
side fastening holes are formed on one side surface and the other side surface of the connection block,
wherein the side fastening hole formed on the one side surface corresponds to the first column, and
the side fastening hole formed on the other side surface corresponds to the second column.

10. The battery rack of claim 9, wherein:
the number of the side fastening holes formed on the one side surface and the other side surface of the connection block are two or more.

11. The battery rack of claim 1, wherein:
the first column and the second column are located adjacent to each other, and
the axial cross section of the first column and the axial cross section of the second column have shapes symmetrical with each other.

12. The battery rack of claim 1, wherein:
the first column and the second column are located adjacent to each other,
the first column comprises a first outside curved part that is curved toward the outside of the first sub-rack, and a first inside curved part that is curved toward the inside of the first sub-rack,
the second column comprises a second outside curved part that is curved toward the outside of the second sub-rack, and a second inside curved part that is curved toward the inside of the second sub-rack,
the first outside curved part and the second outside curved part are located adjacent to each other, and
a separation space is formed between the first inside curved part and the second inside curved part.

13. The battery rack of claim 12, wherein:
a connection block is located in the separation space, and
the first column and the second column are coupled through the connection block.

14. The battery rack of claim 13, wherein:
an opening is formed on a rear surface of the first column and the second column, and the connection block enters the separation space through the opening.

15. The battery rack of claim 14, wherein:
the opening is formed by deforming or removing a part of the first column and the second column.

16. The battery rack of claim 2, wherein:
the connection block is located adjacent to the end of the first column and the end of the second column.

17. The battery rack of claim 2, wherein:
the number of the connection block is two or more,
wherein one of the connection blocks is located at one end of the first column and the second column, and the other is located at the other end of the first column and the second column.

18. The battery rack of claim 2, wherein:
the first column comprises a front column located in front of the battery rack, and a rear column located in the rear of the battery rack,
the second column comprises a front column located in front of the battery rack, and a rear column located in the rear of the battery rack, and
the number of the connection block is two or more,
wherein one of the connection blocks is located between the front column of the first column and the front column of the second column, and
the other of the connection blocks is located between the rear column of the first column and the rear column of the second column.

19. The battery rack of claim 1,
further comprising a third sub-rack that is located adjacent to the first sub-rack or the second sub-rack.

20. An energy storage system comprising the battery rack of claim 1.
